# FASCICULE DE BREVET EUROPEEN

(11) **EP 1 413 120 B1**
(45) Date de publication et mention de la délivrance du brevet: **11.04.2007**
(21) Numéro de dépôt: 02791501.6
(22) Date de dépôt: 18.07.2002
(51) Int. Cl.: H04L 29/06

(54) **PROCEDE DE COMMUNICATION POUR ECHANGER DE MANIERE CONTROLEE DES DONNEES ENTRE UN TEMINAL CLIENT ET UN RESEAU DE SITES HOTES ET ENSEMBLE SERVEUR DE PROTECTION POUR LA MISE EN OEUVRE DE CE PROCEDE**
KOMMUNIKATIONSVERFAHREN FÜR EINEN GESTEUERTEN DATENAUSTAUSCH ZWISCHEN EINEM CLIENT-ENDGERÄT UND EINEM HOST-SITE-NETZWERK UND SCHÜTZENDER SERVERSATZ DAFÜR
COMMUNICATION METHOD FOR CONTROLLED DATA EXCHANGE BETWEEN A CLIENT TERMINAL AND A HOST SITE NETWORK AND PROTECTIVE SERVER SET THEREFOR

(30) Priorité: 02.08.2001 FR 0110413
(43) Date de publication de la demande: 28.04.2004
(73) Titulaire: Dolphian SA, 92300 Levallois-Perret (FR)
(72) Inventeur: GROSS, Gabriel, 75116 Paris (FR)
(74) Mandataire: Bérogin, Francis
(86) Numéro de dépôt international: PCT/FR2002/002564
(87) Numéro de publication internationale: WO 2003/013042

(56) Documents cités:
- EP-A- 0 951 158
- WO-A-01/50299

## Description

L'invention est relative à un procédé de communication pour échanger, de manière contrôlée, des données entre un terminal client et un réseau de sites hôtes, ainsi qu'à un ensemble serveur de protection pour la mise en oeuvre de ce procédé.

Dans ce document, le terme « terminal » désigne un micro-ordinateur, un téléphone mobile, ou tout autre dispositif apte à communiquer avec un réseau de serveurs de données.

Dans une application particulière, le procédé selon l'invention est destiné à permettre à un internaute de contrôler la diffusion sur Internet, des informations qui le concernent.

D'une part, un internaute peut, par exemple afin de bénéficier de services personnalisés, être amené à transmettre à un site hôte certaines données sur son identité, ses revenus, ses préférences en terme de loisirs, de shopping, etc., mais néanmoins souhaiter que ces informations ne soient pas utilisées pour d'autres fins que celles pour lesquelles il les a révélées.

D'autre part, certains sites envoient, à destination des terminaux des internautes qui se connectent à eux, des témoins, aussi appelés « cookies », pour les installer automatiquement sur ces terminaux. Ces cookies sont des fichiers, qui une fois enregistrés dans la mémoire de ces terminaux, permettent au serveur du site qui les a émis de recevoir des informations sur l'internaute et son comportement. Les internautes souhaitent parfois éviter l'installation de cookies sur leur terminal et éviter, sans perdre nécessairement pour autant toute possibilité de bénéficier de services personnalisés, que des informations qui les concernent soient recueillies et utilisées à leur insu.

On connaît déjà, par le document EP-A-1 017 205, un procédé pour fournir anonymement des informations sur l'internaute, lorsqu'il navigue sur Internet. Dans ce procédé de l'art antérieur, on enregistre les informations dans une mémoire, on génère un pseudonyme pour l'internaute, on lie ce pseudonyme aux informations contenues dans la mémoire, dans un registre et on transmet le registre, automatiquement ou en réponse aux commandes de l'internaute, aux sites consultés par celui-ci. Ces sites n'ont donc accès aux informations en question qu'en liaison avec le pseudonyme. Un tel pseudonyme est généralement lié à un avatar, c'est à dire une représentation virtuelle créée par l'internaute pour évoluer dans le cyberespace.

Cependant un tel procédé ne permet notamment pas d'éviter que le fournisseur d'accès à Internet (aussi appelé par l'homme du métier « ISP », pour Internet Service Provider), auquel est abonné l'internaute, n'ait connaissance de l'identité des sites consultés par ce dernier.

On connaît également des logiciels qui, une fois installés sur le terminal de l'internaute, permettent à ce dernier de sélectionner les cookies qu'il veut bien voir enregistrés sur son terminal.

Cependant, de tels logiciels n'offrent aucune protection des données transmises sur le réseau, à partir du terminal de l'internaute, que ce soit à partir de celles recueillies grâce aux cookies ou les autres.

Il y a aussi un besoin en procédés et dispositifs de protection de la vie privée des internautes qui permettent éventuellement une offre de services personnalisés.

Le document WO-A-01/50299 décrit un exemple de procédé et dispositif de protection de la vie privée des internautes.

Un but de l'invention est notamment de fournir un procédé de communication de données entre un terminal client et un réseau de sites hôtes, permettant une meilleure protection de ces données, vis-à-vis de leur utilisation par des tiers non autorisés et qui, préférentiellement, autorise l'offre de services personnalisés.

Ce but est atteint, selon l'invention, grâce à un procédé de communication pour échanger de manière contrôlée des données entre un terminal client et un réseau de sites hôtes, ce procédé étant caractérisé par le fait que :
- les données sont échangées, entre le terminal client et le réseau, par l'intermédiaire d'un serveur de protection,
- l'identifiant du terminal client est masqué, vis à vis du réseau, au niveau du serveur de protection,
- au moins une partie des données est protégée de la lecture par toute personne non autorisée à lire cette partie des données, lorsque ces données sont communiquées entre le serveur de protection et le terminal client ;
- un profil de préférences qualifiant un utilisateur du terminal client et agréé par cet utilisateur est comparé à des connaissances sur au moins un site hôte, et
- l'échange des données entre le terminal client et ce site hôte est contrôlé en fonction d'informations issues de cette comparaison.

En effet, selon ce procédé :
- d'une part, entre le terminal client (un terminal d'internaute par exemple), et le serveur de protection, les données échangées sont rendues, au moins en partie, voire totalement, confidentielles par la protection d'au moins une partie de celles-ci ; ainsi lorsque l'utilisateur accède au serveur de protection grâce à un fournisseur d'accès au réseau, les données échangées entre le serveur de protection et le terminal client sont au moins en partie protégées de la lecture par le fournisseur d'accès ; et
- d'autre part, l'identifiant du terminal client (adresse IP pour un terminal connecté à Internet ; IP étant l'acronyme de « Internet Protocol ») est masqué et les données transmises entre le terminal client et le reste du réseau sont soumises à un contrôle, en fonction de ce que l'utilisateur souhaite, parmi les informations qui le concernent, diffuser ou non sur le réseau.

Ainsi, certaines des données qui concernent l'utilisateur peuvent, si ce dernier le souhaite, n'être connues, ni des tiers exploitant les sites visités par celui-ci, ni des tiers qui envoient des cookies à destination du terminal de l'internaute sans que ce dernier ait choisi de se connecter à un site de ces tiers (par exemple les régies publicitaires), ni même de son fournisseur d'accès.

Dans des modes de réalisation préférés, le procédé selon l'invention comporte l'une et/ou l'autre des caractéristiques suivantes :
- des adresses de sites hôtes à destination desquels sont envoyées des données, à partir du terminal client, sont dissimulées au fournisseur d'accès ; dans le cadre d'une connexion à Internet ces adresses sont des adresses URL (Acronyme de l'expression anglo-saxonne « Uniform Ressource Locator ») ;
- le serveur de protection fournit sur requête, à la place du fournisseur d'accès, une adresse de site hôte identifié par un nom, en correspondance de ce nom, à l'aide d'un système de noms de domaine ; ainsi dans le cadre d'une connexion à Internet, ce système de noms de domaine est appelé DNS (Acronyme de l'expression anglo-saxonne « Domain Naming System ») ;
- une partie, comportant des informations sur l'identité du terminal client, d'une requête formulée à partir du terminal client à destination d'un site hôte, est modifiée, voire éliminée, avant de transiter vers le site hôte auquel est destinée la requête ; ainsi dans le cadre d'une connexion à Internet, c'est une partie de l'en-tête (aussi appelé « header » par l'homme du métier) de la requête qui fait l'objet de cette modification ;
- il comporte un filtrage de témoins (cookies) en provenance du réseau par le serveur de protection, et un stockage, au niveau du serveur de protection, d'au moins une partie de ces témoins ; certains témoins sont éliminés tandis que d'autres sont enregistrés au niveau du serveur de protection ; aucun témoin n'est stocké sur le terminal client, mais l'utilisateur peut néanmoins profiter des avantages que procurent certains de ces témoins, comme l'offre de services personnalisés en fonction du profil d'informations attaché directement à son identité ou à l' (aux) avatar(s) qui le représente(nt) ;
- un serveur de courrier électronique fournit au moins une adresse de courrier électronique à usage unique ;
- il comprend un suivi de l'utilisation de l'adresse à usage unique, faite par un tiers à qui cette adresse de courrier électronique a été transmise ;
- une pluralité de comptes de messagerie électronique est attribuée à un utilisateur, avec un portail unique, indépendant du terminal client et personnel pour gérer ces comptes ;
- un statut de confiance est associé à un site hôte, en fonction de connaissances, stockées dans une base de connaissances, sur au moins la politique de protection des données personnelles par un tiers exploitant ce site hôte ; cette politique est par exemple définie d'une part, par un formulaire P3P (De « Platform for Privacy Préférence Project ») qualifiant un site, et d'autre part, par des tests sur l'utilisation des informations par ce site et/ou par des connaissances générales (réputation par exemple) de l'entreprise qui exploite ce site ;
- un formulaire de saisie d'informations sur l'utilisateur, fourni par un site hôte et destiné à l'enregistrement des informations saisies, par ce site hôte, est rempli automatiquement par le serveur de protection en fonction du statut de confiance, avant d'être soumis à l'approbation de l'utilisateur ;
- l'approbation par l'utilisateur est réalisée automatiquement en fonction d'un profil de protection qu'il a prédéfini ;
- l'utilisateur du terminal client est représenté, vis-à-vis du réseau, par au moins un avatar ; ainsi l'utilisateur peut diffuser des données qualifiantes, par exemple sur ses préférences, sans que celles-ci soient nécessairement attachées à son identité réelle ;
- un profil d'informations comprenant le profil de préférences et associé à l'identité réelle de l'utilisateur ou à chaque avatar est stocké au niveau d'une base de connaissances, ce profil étant déterminé, au moins en partie, par le comportement de l'utilisateur lorsqu'il communique avec le réseau en utilisant cet avatar ; ainsi, les préférences associées à l'avatar de l'utilisateur peuvent être prises en compte dans ce profil ; le profil d'informations comporte les données qualifiantes sur l'utilisateur, associées à cet avatar ;
- le profil d'informations est modifié par l'utilisateur par l'intermédiaire d'un serveur de configuration ; ceci permet à l'utilisateur de modifier les données qui le concernent enregistrées dans ce profil d'informations, par exemple, pour affiner ce profil en vue d'une amélioration de la personnalisation des services qui peuvent lui être offerts ou pour supprimer de ce profil des informations qu'il ne souhaite pas voir diffusées ;
- une autorisation d'utilisation, par un tiers exploitant un site hôte, des informations attachées à l'identité réelle de l'utilisateur ou à l'avatar sous lequel l'utilisateur accède à ce site hôte est régie par l'utilisateur, au moyen de la sélection et de l'activation d'un profil de protection prédéfini ; par exemple, l'utilisateur peut ainsi choisir un profil « paranoïaque » qui lui permet par exemple de refuser automatiquement et systématiquement la transmission d'une quelconque information qui le concerne, un profil « normal » qui lui permet d'accepter que certaines informations soient communiquées seulement si le site auquel elles sont destinées bénéficie d'une certaine confiance, ou un profil « souple » qui lui permet d'accepter que n'importe quelle information attachée à l'avatar qu'il utilise soit transmise au (x) sites(s) au (x) quel (s) il se connecte ;
- le profil de protection est confronté au statut de confiance pour définir un traitement automatique des données échangées entre ce site hôte et le terminal client, lorsque l'utilisateur souhaite établir une communication avec un site hôte et préalablement à cette communication,et/ou lorsqu'un site hôte souhaite entrer en communication avec le terminal client (par exemple, une régie publicitaire) ; et
- le traitement automatique des données échangées entre le site hôte et le terminal client comporte le filtrage de témoins en provenance du réseau et le stockage, au niveau du serveur de protection, d'au moins une partie des témoins filtrés ; ainsi par exemple, si l'utilisateur choisit un profil « paranoïaque », tout témoin en provenance d'un site ayant un faible statut de confiance est refusé, alors qu'avec un profil « normal », il peut accepter automatiquement les témoins provenant de ce site hôte qui sont détruits en fin de session de connexion avec ce dernier, ou un profil « souple » qui lui permet d'accepter le stockage de n'importe quel témoin provenant de ce site.

Selon un autre aspect, l'invention propose un ensemble serveur de protection pour faire l'interface entre un terminal client et un réseau de sites hôtes et permettre à un utilisateur du terminal client de contrôler la diffusion d'informations qui le concernent, sur le réseau, cet ensemble serveur de protection comportant :
- des moyens, au niveau d'un serveur de protection, pour masquer l'identifiant du terminal client, vis-à-vis du réseau,
- des moyens pour protéger, au moins une partie des données, de la lecture par toute personne non autorisée à lire cette partie des données, lorsque ces données sont communiquées entre le serveur de protection et le terminal client,
- des moyens de comparaison pour comparer, à des connaissances sur au moins un site hôte, un profil de préférences qualifiant l'utilisateur et agréé par ce dernier, et
- des moyens pour contrôler, en fonction d'informations générées par les moyens de comparaison, l'échange des données entre le terminal client et ce site hôte.

Dans des modes de réalisation préférés, le procédé selon l'invention comporte l'une et/ou l'autre des caractéristiques suivantes :
- il comporte des moyens pour créer au moins un avatar permettant de représenter l'utilisateur vis-à-vis du réseau ;
- il comporte des moyens pour gérer un profil d'informations basé sur des données personnelles et sur les communications qu'il établit avec le réseau ;
- il comporte des moyens pour protéger de la lecture par un fournisseur d'accès au réseau, au moins une partie des données échangées entre le serveur de protection et le terminal client ;
- il comporte des moyens pour dissimuler, au fournisseur d'accès, des adresses de sites hôtes à destination desquels sont envoyées des données, à partir du terminal client ;
- le serveur de protection fournit sur requête, à la place du fournisseur d'accès, une adresse de site hôte identifié par un nom, en correspondance de ce nom, à l'aide d'un système de nom de domaine ;
- il comporte des moyens pour éliminer une partie, comportant des informations sur l'identité du terminal client, d'une requête de connexion, formulée à partir du terminal client à destination d'un site hôte, avant que cette requête transite vers le site hôte auquel elle est destinée ;
- il comporte une base de connaissances, associée à l'identité réelle de l'utilisateur ou à un avatar de l'utilisateur, dans laquelle sont enregistrées des informations sur le comportement de l'utilisateur lorsqu'il communique avec le réseau en utilisant respectivement son identité réelle ou cet avatar ;
- il comporte une base de données, destinée à stocker au moins un manifeste de la politique de protection des données personnelles d'un site hôte, et des moyens de comparaison de chaque manifeste avec les informations enregistrées dans la base de connaissances en association avec un avatar de l'utilisateur ou son identité réelle ; un tel manifeste est par exemple un formulaire P3P ; les moyens de comparaison sont avantageusement constitués d'un moteur d'inférence du statut de confiance ; un moteur d'inférence permet de produire de nouvelles propositions à partir de propositions tenues pour acquises, en mettant en oeuvre des règles d'inférence ; dans l'ensemble serveur de protection, les propositions tenues pour acquises comprennent le manifeste de la politique de protection d'un site hôte, les nouvelles propositions comprennent le statut de confiance et les règles d'inférence sont définies à partir des informations associées à l'avatar de l'utilisateur ;
- il comporte des moyens de filtrage de témoins en provenance du réseau et des moyens de stockage, après approbation par l'utilisateur, d'au moins une partie des témoins filtrés ;
- il comporte une pluralité de serveurs de protection organisés en un réseau de serveurs mandataires (aussi appelés « serveurs Proxy » par l'homme du métier) pour permettre une plus grande proximité entre le terminal client et au moins l'un de ces serveurs de protection ;
- il comporte un serveur central pour diriger l'utilisateur vers le serveur de protection le plus proche du terminal client; et
- il comporte un serveur dédié à la création d'avatars et au stockage de témoins, et comportant une base de connaissances, associée à l'identité réelle de l'utilisateur ou à un avatar, dans laquelle sont enregistrées des informations sur le comportement de l'utilisateur lorsqu'il communique avec le réseau en utilisant son identité réelle ou cet avatar.

Selon encore un autre aspect, l'invention propose un programme d'ordinateur chargeable dans une mémoire, associée à un processeur, et comprenant des portions de codes pour la mise en oeuvre d'un procédé tel que mentionné précédemment, lors de l'exécution dudit programme.

Selon encore un autre aspect, l'invention propose un programme d'ordinateur chargeable dans un ordinateur ayant une mémoire associée à un processeur, et comprenant des portions de codes adaptés pour que l'ordinateur forme un ensemble serveur de protection tel que mentionné précédemment,

Selon encore un autre aspect, l'invention propose un support de données sur lequel est enregistré un programme d'ordinateur tel que mentionné précédemment.

Selon encore un autre aspect, l'invention propose un procédé de communication tel que défini ci-dessus, comprenant une étape préliminaire au cours de laquelle on télécharge un programme d'ordinateur tel que mentionné précédemment.

D'autres aspects, buts et avantages de l'invention apparaîtront à la lecture de la description détaillée qui suit d'un de ses modes de réalisation. L'invention sera également mieux comprise à l'aide des références aux dessins sur lesquels :
- la figure 1 représente, schématiquement, la structure de la communication entre un terminal client et un réseau de sites hôtes, dans un exemple de mode de mise en oeuvre du procédé conforme à la présente invention ;
- la figure 2 représente, schématiquement, l'architecture d'un ensemble serveur pour la mise en oeuvre de l'exemple de procédé représenté sur la figure 1 ; et
- la figure 3 représente, schématiquement, l'architecture des fonctions de protection de l'ensemble serveur dont l'architecture est représentée sur la figure 2.

L'invention est décrite ci-dessous dans le cadre de sa mise en oeuvre pour confidentialiser la communication entre un terminal client, constitué d'un ordinateur personnel 1, et un ensemble de sites 2 hôtes tels que des sites Internet.

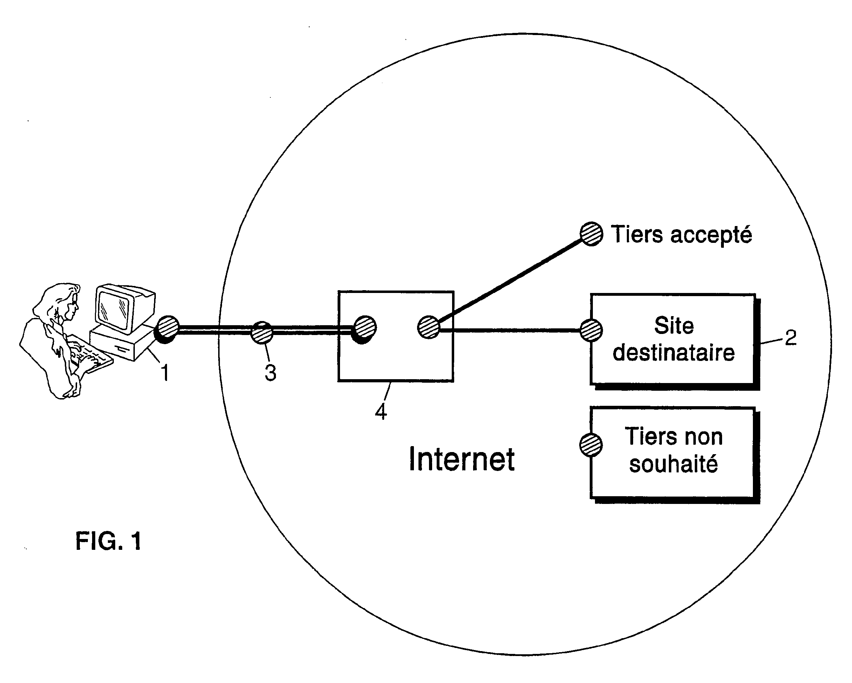

Comme représenté sur la figure 1, l'ordinateur personnel 1 est connecté à Internet via un fournisseur d'accès 3 et un ensemble serveur de protection 4.

L'ensemble serveur de protection 4 offre de nombreuses fonctions.

A titre illustratif, la figure 1 représente le cas où l'ensemble serveur de protection 4 permet, à l'internaute de l'ordinateur personnel 1 de contrôler et d'accepter ou non l'intervention de tiers lors de sa communication avec un site 2 destinataire. En effet, lorsqu'un utilisateur consulte une page sur ce site 2 destinataire, il peut arriver que cette page contienne des insertions émanant de tiers (publicité par exemple) et que, en outre, ce tiers émette un cookie à destination de l'ordinateur de l'internaute. Grâce à l'ensemble serveur de protection 4 selon l'invention, l'internaute peut choisir d'accepter ou non le cookie émis par ce tiers.

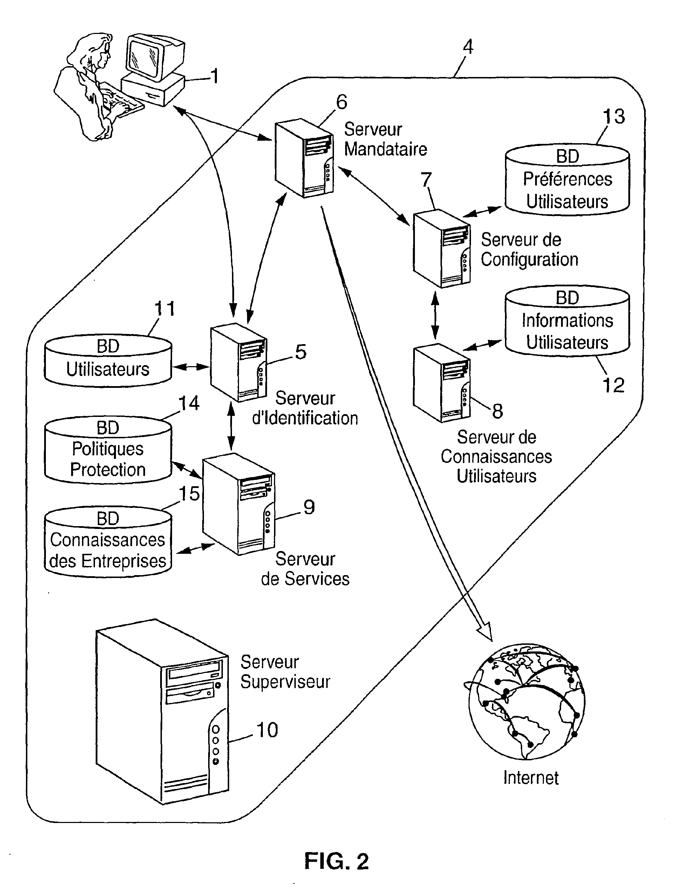

L'architecture générale d'un ensemble serveur de protection 4 tel que celui représenté sur la figure 1 est illustrée par la figure 2.

Cet ensemble serveur de protection 4 comporte principalement :
- un serveur d'Identification 5,
- un réseau de serveurs Mandataires 6, chaque serveur Mandataire 6 étant associé à un serveur de Configuration, lui même associé à un serveur de Connaissances Utilisateurs 8,
- un serveur de Services 9 et
- un serveur Superviseur 10.

Dans la suite de ce document, par souci de simplification, l'ensemble serveur de protection 4 est décrit avec un seul serveur Mandataire 6, auquel est associé un seul serveur de Configuration 7, lui-même associé à un seul serveur de Connaissances Utilisateurs 8, bien que ces différents serveurs soient dupliqués en réseau.

Comme représenté sur cette figure 2, l'internaute accède au réseau Internet à partir de son ordinateur personnel 1. Afin d'utiliser les services de l'ensemble serveur de protection 4, l'internaute se sert d'outils d'accès, de configuration et de rapport.

Ces outils d'accès, de configuration et de rapport sont des programmes d'ordinateur 1 enregistrés dans la mémoire de l'ordinateur à partir d'un support tel qu'un cédérom ou après téléchargement à partir d'un site Internet qui distribue de tels programmes.

Ces outils d'accès, de configuration et de rapport sont aptes à permettre à l'internaute :
- d'être identifié auprès de l'ensemble serveur de protection 4,
- de recevoir en retour un « jeton d'accès » pour une session,
- de créer des avatars ou modifier un avatar existant,
- de sélectionner un avatar pour se connecter au réseau Internet,
- de sélectionner un profil d'informations prédéfini, éventuellement de modifier ce profil d'informations prédéfini pour le personnaliser et/ou de créer complètement un profil d'informations,
- d'attacher à un avatar, le profil d'informations prédéfini sélectionné, modifié ou créé,
- de modifier un profil de préférence attaché à un avatar,
- d'obtenir un rapport de navigation,
- d'activer un service de protection de sa vie privée par l'ensemble serveur de protection 4 sur la base du profil d'information sélectionné et
- d'accéder à divers autres services accessibles sur l'ensemble serveur de protection 4.

L'internaute se connecte à l'ensemble serveur de protection 4, au niveau du serveur d'Identification 5. La fonction d'identification du serveur d'Identification est mise en oeuvre grâce aux fonctions relatives au certificat d'identification personnel du navigateur Internet de l'internaute. Le serveur d'Identification confronte l'identité de l'internaute à des données sur les utilisateurs ayant accès à l'ensemble serveur de protection 4, stockées dans une base de données Utilisateurs 11. Après identification, les internautes autorisés reçoivent un "jeton d'accès" pour une session.

L'internaute ayant reçu un « jeton d'accès » à une session, accède au serveur Mandataire 6. Avantageusement et essentiellement pour des raisons de performances dans les vitesses de communication et de bandes passantes, le serveur Mandataire 6 est le serveur « Proxy » situé le plus proche possible de l'internaute.

Le serveur Mandataire 6 réalise l'interface entre l'internaute, les autres serveurs de l'ensemble serveur de protection 4 et le réseau Internet. Il a principalement pour fonctions de :
- filtrer et sélectionner les cookies en provenance du réseau ;
- effectuer une comparaison entre l'expression d'une politique de protection de la vie privée, d'un site 2 et le profil d'informations attaché à l'avatar utilisé par l'internaute pour accéder à ce site 2,
- dériver et stocker les cookies acceptés par l'internaute,
- modifier l'en-tête des requêtes de connexion,
- supprimer l'adresse d'identification (adresse IP) de l'internaute, des données envoyées aux sites 2 destinataires, ainsi que l'adresse de ces sites 2 destinataires, des données transitant par le fournisseur d'accès,
- remplir automatiquement des formulaires en fonction du statut de confiance associé au site 2 ayant émis ce formulaire
- faire, selon la table DNS, la conversion nom/adresse des sites 2 visés par l'internaute,
- analyser le contenu des pages Web consultées et retirer de ces pages les éléments non souhaités par l'internaute, et
- établir l'historique des sessions de connexion et les préférences de l'internaute.

Le filtrage et la sélection des cookies sont réalisés en fonction de données stockées dans une base de données d'Informations Utilisateurs 12 qui comporte entre autres choses, les souhaits de l'internaute quant au traitement des cookies.

Les cookies considérés comme acceptables par l'internaute sont stockés dans une mémoire. Cette mémoire est accessible à l'internaute et au serveur du site 2 qui l'a émis, mais ne se situe pas sur l'ordinateur 1 de l'internaute.

L'en-tête des requêtes de connexion, que cette connexion soit établie selon le protocole http ou selon un autre protocole, est modifiée, avant de transiter vers le site 2, en fonction de critères et de règles de protection et de respect de la vie privée définies par des comités d'ethnique.

L'historique des sessions et les préférences de l'internaute sont, selon son profil d'informations, soit détruites soit transférées au serveur de Connaissances Utilisateurs 8 associé au serveur Mandataire 6.

Le serveur Mandataire 6 est programmé à l'aide de programmes libres et bien connus de l'homme du métier (Squid^{®}, Apache^{®}, etc.).

Le serveur de Configuration 5 permet de :
- créer, sélectionner ou modifier un avatar et/ou un profil d'informations,
- sélectionner, créer et/ou configurer des profils de préférences,
- consulter les cookies, les télécharger ou les détruire, et
- accéder à des services tels que « Aide », « FAQ », messagerie électronique, etc., ainsi qu'au rapport de navigation.

L'internaute a la possibilité de créer plusieurs avatars. A chaque avatar est attaché une ou plusieurs adresse(s) électronique(s), une mémoire de stockage de cookies et de fichiers de connexions, un profil d'informations, un profil de préférences, etc. Les profils d'informations et de préférences peuvent être différents d'un avatar à un autre.

Un profil d'informations comporte des informations identifiantes et des informations qualifiantes sur l'internaute. Les informations identifiantes sont, par exemple, son état civil, son adresse, etc. Les informations qualifiantes sont, par exemple, son âge, ses centres d'intérêt, etc.. Les informations identifiantes peuvent être réelles ou virtuelles. Elles sont enregistrées pour chaque avatar. Le procédé selon l'invention en permet une divulgation contrôlée. L'internaute choisit de conférer un plus ou moins grand degré d'anonymat à un avatar donné. A certains avatars, il peut associer un pseudonyme, tandis qu'il peut révéler son identité avec d'autres (par exemple pour des achats en ligne). Il peut aussi, par exemple, indiquer des centres d'intérêt différents selon les avatars pour obtenir des services personnalisés et spécialisés en fonction de ces centres d'intérêt.

La gestion des profils d'informations, en relation avec les avatars de chaque internaute, est réalisée au niveau du serveur de Connaissances Utilisateurs 8, grâce aux informations stockées dans la base de données d'Informations Utilisateurs 10. Le serveur de Connaissances Utilisateurs 8 et la base de données d'Informations Utilisateurs 10 sont hautement sécurisés.

Cette gestion des profils d'informations est réalisée par l'internaute, grâce à une ou plusieurs page(s) Web éditée (s) et gérée(s) par le serveur de Configuration 7 en relation avec le serveur de Connaissances Utilisateurs 8. Chaque page Web interface la communication entre l'internaute et ce serveur de Configuration 7.

A ces profils d'informations s'ajoutent un ou plusieurs profil(s) de préférences. Les profils de préférences de l'internaute sont générés à partir des informations fournies directement par l'internaute ou à partir de l'analyse de son comportement (pages Web consultées, temps de connections, etc.). Un profil de préférences distinct peut être associé à chaque avatar. Les profils de préférences des utilisateurs sont stockées dans une base de données Préférences Utilisateurs 13 directement accessible par le serveur de Configuration 7.

Le rapport de navigation comporte :
- l'historique des navigations de l'internaute,
- la liste des cookies reçus au cours de ces navigations,
- l'état de la session de connexion en cours, qui informe en particulier l'internaute sur les profils attachés à l'avatar qu'il utilise et le ou les site(s) 2 au(x)quel(s) il est connecté,
- les récentes actions (par exemple : "Inactivation d'un cookie émis par 'Le serveur de bandeaux publicitaires X' lors de la consultation du site 'Les assurances Y"'), et
- des explications sur celles-ci (par exemple : « Le site hôte souhaitait accéder à l'historique de votre navigateur pour utiliser ces données en vue de la définition d'un profil et personnaliser ou adapter ses services à ce profil »).

L'état de la session de connexion en cours évolue avec le temps et est enregistré au fur à mesure de son évolution.

Le rapport de navigation est géré par le serveur de Connaissances Utilisateurs 8 via une interface générée par le serveur de Configuration 7. L'accès à cette interface se fait par l'intermédiaire du navigateur de l'internaute, grâce au « jeton d'accès ». Cet accès est lancé à partir d'une application spécifique telle qu'une icône ou une ligne de commande (Systray^{®} pour un ordinateur fonctionnant avec Windows^{®}, Menu Bar Icon^{®} sur un Mac^{®'}, une icône sur une Linux^{®} box) .

Le serveur Mandataire 6 permet également d'accéder au serveur de Services 9.

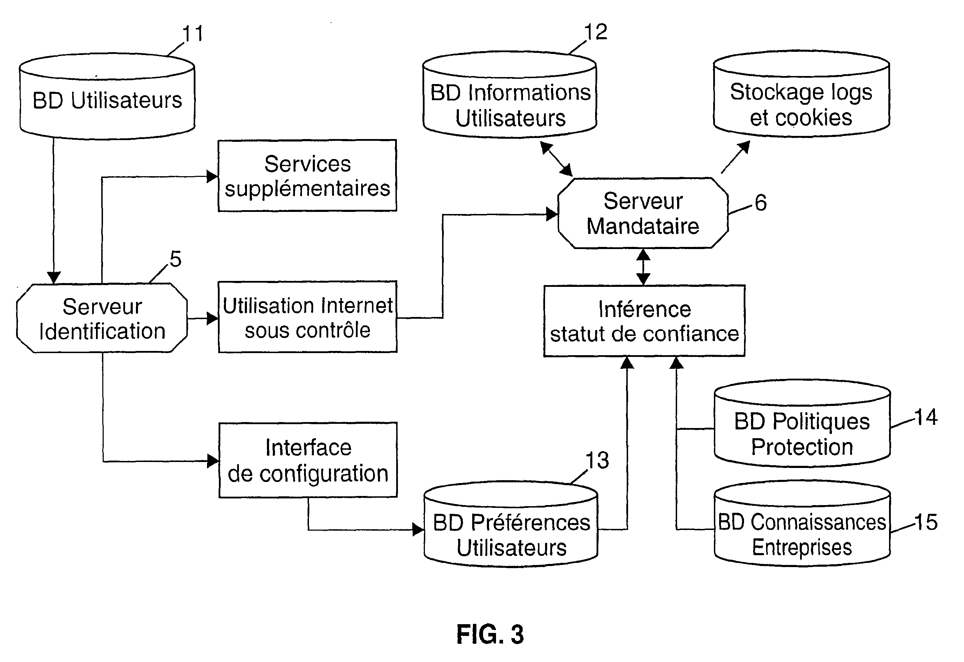

Ce serveur de Services 9 gère, entre autres choses, des informations sur les sites hôtes et leur politique de protection de la vie privée des internautes. Ces informations sont utilisées dans la mise en oeuvre des fonctions de protection de l'ensemble serveur de protection 4. L'ensemble des fonctions de protection est illustré par la figure 3.

Les fonctions de protection de l'ensemble serveur de protection 4 sont liées aux politiques d'utilisation des données personnelles par des sites 2 du réseau Internet, aux connaissances sur les menaces, vis à vis de la vie privée des internautes, que représentent certains des sites 2 (cookies de tiers, publicité, etc.) et à la messagerie électronique.

Plus précisément, les politiques d'utilisation des données personnelles par des sites 2 sont répertoriées et stockées au niveau d'une base de données Politiques Protection 14. Ces politiques correspondent par exemple aux politiques P3P des sites 2 hôtes, avantageusement complétées par diverses informations. Ces diverses informations sur les sites 2 hôtes sont par exemple collectées par l'ensemble serveur de protection 4 et stockées dans une base de données Connaissances Entreprises 15. Elles concernent par exemple l'utilisation des adresses électroniques faites par les sites 2, la réputation de ces sites 2 et les relations de ces sites 2 avec des sites tiers. La pérennité de ces politiques et des informations auxquelles elles correspondent sont régulièrement contrôlées (par exemple avec un contrôle de type somme de contrôle).

A partir de la base de données Connaissances Entreprises 15, le serveur de Services :
- fournit des indications aux serveurs Mandataires 6 qui, complétées par les profils d'informations et de préférences, définissent le traitement automatique à opérer sur les flux de données échangées entre l'internaute et le réseau,
- établit des listes de domaines, d'adresses IP et autre sources d'informations susceptibles d'être utilisées par des serveurs de publicité et autres serveurs bien connus pour envoyer à destination des ordinateurs individuels, des cookies de traquage, et
- contrôle l'évolution de ces listes.

Les informations ainsi répertoriées, dans les bases de données Politiques Protection 14 et Connaissance Entreprises 15, sont comparées au profil de préférences sélectionné dans la base de données Préférences Utilisateurs 13, par l'internaute pour inférer automatiquement un statut de confiance sur chaque site visité par l'internaute (voir figure 3).

Le serveur de Services 9 gère également des messageries électroniques. Le serveur de Services 9 :
- fournit à la demande des adresses électroniques, à l'internaute utilisateur de l'ensemble serveur de protection 4,
- substitue des adresses à usage unique à de vraies adresses, par exemple après validation d'un formulaire proposé à l'internaute,
- effectue un suivi de l'utilisation des adresses à usage unique par les sites 2 auxquels elles sont destinées, analyse ce suivi et l'enregistre dans un journal,
- filtre les courriers électroniques entrants en fonction de leur provenance et des préférences de l'utilisateur,
- effectue éventuellement un contrôle anti-virus des courriers électroniques entrants et
- dispatche les courriers électroniques acceptés après le filtrage et le contrôle éventuels précédents.

Tous les serveurs de l'ensemble serveur de protection sont sous le contrôle du serveur Superviseur 10.

Ce serveur Superviseur 10 :
- gère la table DNS et dirige l'internaute, via un serveur central (non représenté), vers le serveur Mandataire 6 qui lui est le plus proche,
- fournit une interface pour des auditeurs et des fonctions de traçabilité sur requête de ces auditeurs, et
- surveille, en quasi temps réel, l'activité de chaque serveur de l'ensemble serveur de protection 4, avec enregistrement des événements dans un journal et contrôle des performances de l'ensemble serveur de protection 4.

Outre l'utilisation du réseau Internet en contrôlant la protection des données qui lui sont personnelles et la configuration d'outils de gestion de ce contrôle, l'ensemble serveur de protection 4 permet à un internaute autorisé d'accéder à d'autres Services tels que :
- la programmation d'alertes en fonction d'évènements dans des forums de discussion,
- l'interaction sécurisée avec des comptes bancaires, etc.

L'environnement relatif aux fonctions de communication avec le serveur de protection 4 et le réseau Internet est programmé en langage Java^{®} ou PHP^{®} (Hypertext Processor).

## Revendications

1. Procédé de communication pour échanger de manière contrôlée des données entre un terminal client (1) et un réseau de sites (2) hôtes, ce procédé étant **caractérisé par le fait que** :
- les données sont échangées, entre le terminal client (1) et le réseau, par l'intermédiaire d'un serveur de protection (6),
- l'identifiant du terminal client est masqué, vis à vis du réseau, au niveau du serveur de protection (6),
- au moins une partie des données sont protégées de la lecture par toute personne non autorisée à lire cette partie des données, lorsque ces données sont communiquées entre le serveur de protection (6) et le terminal client (1),
- un profil de préférences qualifiant un utilisateur du terminal client et agréé par cet utilisateur est comparé à des connaissances sur au moins un site hôte (2), et
- l'échange des données entre le terminal client et ce site (2) hôte est contrôlé en fonction d'informations issues de cette comparaison.

2. Procédé selon la revendication 1, dans lequel l'utilisateur accède au serveur de protection (6) grâce à un fournisseur d'accès (3) au réseau, pour lequel les données échangées entre le serveur de protection (4) et le terminal client (1) sont au moins en partie protégées de la lecture.

3. Procédé selon la revendication 2, dans lequel des adresses de sites (2) hôtes à destination desquels sont envoyées des données, à partir du terminal client (1), sont dissimulées au fournisseur d'accès (3).

4. Procédé selon l'une des revendications 2 et 3, dans lequel le serveur de protection (6) fournit sur requête, à la place du fournisseur d'accès (3), une adresse de site hôte identifié par un nom, en correspondance de ce nom, à l'aide d'un système de nom de domaine.

5. Procédé selon l'une des revendications précédentes, dans lequel une partie, comportant des informations sur l'identité du terminal client (1), d'une requête formulée à partir du terminal client (1) à destination d'un site (2) hôte, est modifiée avant de transiter vers le site (2) hôte auquel est destinée la requête.

6. Procédé selon l'une des revendications précédentes, comprenant un filtrage de témoins en provenance du réseau par le serveur de protection (6) et un stockage, au niveau du serveur de protection (6), d'au moins une partie de ces témoins.

7. Procédé selon l'une des revendications précédentes, dans lequel un serveur de courrier électronique (9) fournit au moins une adresse de courrier électronique à usage unique.

8. Procédé selon la revendication 7, comprenant un suivi de l'utilisation de l'adresse à usage unique, faite par un tiers à qui cette adresse de courrier électronique a été transmise.

9. Procédé selon l'une des revendications précédentes, dans lequel une pluralité de comptes de messagerie électronique est attribuée à un utilisateur, avec un portail unique, indépendant du terminal client et personnel pour gérer ces comptes.

10. Procédé selon l'une des revendications précédentes, dans lequel un statut de confiance est associé à un site (2) hôte, en fonction de connaissances, stockées dans une base de connaissances (14,15), sur au moins la politique de protection des données personnelles par un tiers exploitant ce site (2) hôte.

11. Procédé selon la revendication 10, dans lequel un formulaire de saisie d'informations sur l'utilisateur, fourni par un site (2) hôte et destiné à l'enregistrement des informations saisies, par ce site (2) hôte, est rempli automatiquement par le serveur de protection (6) en fonction du statut de confiance, avant d'être soumis à l'approbation de l'utilisateur.

12. Procédé selon la revendication 11, dans lequel l'approbation par l'utilisateur est réalisée automatiquement en fonction d'un profil de protection qu'il a prédéfini.

13. Procédé selon l'une des revendications précédentes, dans lequel l'utilisateur du terminal client (1) est représenté, vis-à-vis du réseau, par au moins un avatar.

14. Procédé selon la revendication 13, dans lequel un profil d'informations comprenant le profil de préférences et associé à l'identité réelle de l'utilisateur ou à chaque avatar est stocké au niveau d'une base de connaissances (12,13), ce profil étant déterminé, au moins en partie, par le comportement de l'utilisateur lorsqu'il communique avec le réseau en utilisant cet avatar.

15. Procédé selon la revendication 14, dans lequel le profil d'informations est modifié par l'utilisateur par l'intermédiaire d'un serveur de configuration (7).

16. Procédé selon l'une des revendications 13 à 15, dans lequel une autorisation d'utilisation, par un tiers exploitant un site (2) hôte, des informations attachées à l'identité réelle de l'utilisateur ou à l'avatar sous lequel l'utilisateur accède à ce site (2) hôte est régie par l'utilisateur, au moyen de la sélection et de l'activation d'un profil de protection prédéfini.

17. Procédé selon les revendications 10 et 16 prises en combinaison, dans lequel le profil de protection est confronté au statut de confiance pour définir un traitement automatique des données échangées entre ce site (2) hôte et le terminal client (1), lorsque l'utilisateur souhaite établir une communication avec un site (2) hôte et préalablement à cette communication, et lorsqu'un site hôte (2) souhaite entrer en communication avec le terminal client.

18. Procédé selon les revendications 6 et 17 prises en combinaison, dans lequel le traitement automatique des données échangées entre le site (2) hôte et le terminal client (1) comporte le filtrage de témoins en provenance du réseau et le stockage, au niveau du serveur de protection (6), d'au moins une partie des témoins filtrés.

19. Ensemble serveur de protection pour faire l'interface entre un terminal client (1) et un réseau de sites (2) hôtes et permettre à un utilisateur du terminal client de contrôler la diffusion d'informations qui le concernent, sur le réseau, cet ensemble serveur de protection (6) comportant :
- des moyens, au niveau d'un serveur de protection (6), pour masquer l'identifiant du terminal client, vis à vis du réseau,
- des moyens pour protéger au moins une partie des données, de la lecture par toute personne non autorisée à lire cette partie des données, lorsque ces données sont communiquées entre le serveur de protection (6) et le terminal client (1),
- des moyens de comparaison pour comparer, à des connaissances sur au moins un site hôte (2), un profil de préférences qualifiant l'utilisateur et agréé par ce dernier, et
- des moyens pour contrôler, en fonction d'informations générées par les moyens de comparaison, l'échange des données entre le terminal client et ce site (2) hôte.

20. Ensemble serveur de protection selon la revendication 19 comportant des moyens (8) pour créer au moins un avatar permettant de représenter l'utilisateur vis à vis du réseau.

21. Ensemble serveur de protection selon l'une des revendications 19 et 20, comportant des moyens pour gérer un profil d'informations basé sur des données personnelles et sur les communications qu'il établit avec le réseau.

22. Ensemble serveur de protection selon l'une des revendications 19 à 21, comportant des moyens pour protéger de la lecture par un fournisseur d'accès au réseau (3), au moins une partie des données échangées entre le serveur de protection (6) et le terminal client (1).

23. Ensemble serveur de protection selon la revendication 22, comportant des moyens pour dissimuler, au fournisseur d'accès (3), des adresses de sites (2) hôtes à destination desquels sont envoyées des données, à partir du terminal client (1).

24. Ensemble serveur de protection selon l'une des revendications 22 et 23, dans lequel le serveur de protection (6) fournit sur requête, à la place du fournisseur d'accès (3), une adresse de site (2) hôte identifié par un nom, en correspondance de ce nom, à l'aide d'un système de nom de domaine.

25. Ensemble serveur de protection selon l'une des revendications 19 à 24, comportant des moyens pour éliminer une partie, comportant des informations sur l'identité du terminal client (1), d'une requête de connexion, formulée à partir du terminal client (1) à destination d'un site (2) hôte, avant que cette requête transite vers le site (2) hôte auquel elle est destinée.

26. Ensemble serveur de protection selon l'une des revendications 20 à 25, comportant une base de connaissances (13), associée à l'identité réelle de l'utilisateur ou à un avatar de l'utilisateur, dans laquelle sont enregistrées des informations sur le comportement de l'utilisateur lorsqu'il communique avec le réseau en utilisant respectivement son identité réelle ou cet avatar.

27. Ensemble serveur de protection selon la revendication 26, comportant :
- une base de données (14,15) destinée à stocker au moins un manifeste de la politique de protection des données personnelles d'un site (2) hôte, et
- des moyens de comparaison de chaque manifeste avec les informations enregistrées dans la base de connaissances (12,13) en association avec un avatar de l'utilisateur ou son identité réelle.

28. Ensemble serveur de protection selon l'une des revendications 19 à 27, comportant des moyens de filtrage de témoins en provenance du réseau et des moyens de stockage, après approbation par l'utilisateur, d'au moins une partie des témoins filtrés.

29. Ensemble serveur de protection selon l'une des revendications 19 à 28, comportant une pluralité de serveurs de protection (6) organisés en un réseau de serveurs mandataires pour permettre une plus grande proximité entre le terminal client (1) et au moins l'un de ces serveurs de protection (6).

30. Ensemble serveur de protection selon la revendication 29, comportant un serveur central pour diriger l'utilisateur vers le serveur de protection (6) le plus proche du terminal client (1).

31. Ensemble serveur de protection selon l'une des revendications 19 à 30, comportant un serveur (8) dédié à la création d'avatars et au stockage de témoins, et comportant une base de connaissances (13), associée à l'identité réelle de l'utilisateur ou à un avatar, dans laquelle sont enregistrées des informations sur le comportement de l'utilisateur lorsqu'il communique avec le réseau en utilisant respectivement son identité réelle ou cet avatar.

32. Programme d'ordinateur chargeable dans une mémoire, associée à un processeur, et comprenant des portions de codes pour la mise en oeuvre d'un procédé selon l'une des revendications 1 à 18, lors de l'exécution dudit programme.

33. Programme d'ordinateur chargeable dans un ordinateur ayant une mémoire associée à un processeur, et comprenant des portions de codes adaptées pour que l'ordinateur forme un ensemble serveur de protection (6) selon l'une des revendications 19 à 31.

34. Support de données sur lequel est enregistré un programme d'ordinateur selon l'une des revendications 32 et 33.

35. Procédé de communication selon l'une quelconque des revendications 1 à 18, comprenant une étape préliminaire au cours de laquelle on télécharge un programme d'ordinateur selon l'une des revendications 32 et 33.

## Claims

1. A communication method for controlled data exchange between a client terminal (1) and a host site network (2), this method being **characterized in that**:
- the data are exchanged, between the client terminal (1) and the network, via a protective server (6),
- the client terminal identifier is masked, with respect to the network, at the protective server (6),
- at least part of the data is protected from being read by any person not authorized to read this part of the data, when said data are communicated between the protective server (6) and the client terminal (1),
- a preferences profile categorizing a client terminal user and approved by that user is compared with knowledge on at least one host site (2), and
- the data exchange between the client terminal and this host site (2) is controlled according to information arising from this comparison.

2. The method as claimed in claim 1, **characterized in that** the user accesses the protective server (6) using a network access provider (3) for which at least part of the data exchanged between the protective server (4) and the client terminal (1) is protected from being read.

3. The method as claimed in claim 2, **characterized in that** addresses of host sites (2) to which data is sent from the client terminal (1) are masked from the access provider (3).

4. The method as claimed in either one of claims 2 and 3, **characterized in that** the protective server (6) supplies on request, instead of the access provider (3), an address of a host site identified by a name, in correspondence with this name, by means of a domain name system.

5. The method as claimed in any of the preceding claims, **characterized in that** a part, comprising information on the identity of the client terminal (1), of a request formulated from the client terminal (1) intended for a host site (2), is modified before traveling to the host site (2) for which the request is intended.

6. The method as claimed in any of the preceding claims, comprising a filtering of cookies originating from the network by the protective server (6) and a storing, at the protective server (6), of at least a part of these cookies.

7. The method as claimed in any of the preceding claims, **characterized in that** an electronic mail server (9) supplies at least one disposable electronic mail address.

8. The method as claimed in claim 7, comprising a monitoring of the use of the disposable address by a third party to whom that electronic mail address has been sent.

9. The method as claimed in one of the preceding claims, **characterized in that** a plurality of electronic mail accounts is allocated to a user, with a unique portal, independent of the client terminal and personal for managing these accounts.

10. The method as claimed in one of the preceding claims, **characterized in that** a trust status is associated with a host site (2), according to knowledge, stored in a knowledge base (14, 15), on at least the policy of protection of the personal data by a third party operating this host site (2).

11. The method as claimed in claim 10, **characterized in that** a form for the input of information on the user, supplied by a host site (2) and intended for recording the information input, by this host site (2), is completed automatically by the protective server (6) according to the trust status, before being submitted for the user's approval.

12. The method as claimed in claim 11, **characterized in that** the approval by the user is performed automatically according to a protection profile that he has predefined.

13. The method as claimed in one of the preceding claims, **characterized in that** the user of the client terminal (1) is represented, with respect to the network, by at least one avatar.

14. The method as claimed in claim 13, **characterized in that** an information profile comprising the preferences profile and associated with the actual identity of the user or with each avatar is stored in a knowledge base (12, 13), this profile being determined, at least in part, by the behavior of the user when he communicates with the network using this avatar.

15. The method as claimed in claim 14, **characterized in that** the information profile is modified by the user via a configuration server (7).

16. The method according to any one of claims 13 to 15, **characterized in that** an authorization of use, by a third party operating a host site (2), of the information attached to the user's actual identity or to the avatar by which the user accesses this host site (2) is governed by the user, by the selection and activation of a predefined protection profile.

17. The method as claimed in claims 10 and 16 taken in combination, **characterized in that** the protection profile is compared with the trust status to define an automatic processing of the data exchanged between this host site (2) and the client terminal (1), when the user wants to set up a communication with a host site (2) and prior to that communication, and when a host site (2) wants to enter into communication with the client terminal.

18. The method as claimed in claims 6 and 17 taken in combination, **characterized in that** the automatic processing of the data exchanged between the host site (2) and the client terminal (1) comprises the filtering of cookies originating from the network and the storing, at the protective server (6), of at least part of the filtered cookies.

19. A protective server set to form the interface between a client terminal (1) and a network of host sites (2) and enable a user of the client terminal to control the broadcasting of information concerning him, on the network, this protective server set (6) comprising:
- means, at a protective server (6), of masking the identifier of the client terminal, with respect to the network,
- means of protecting at least part of the data from being read by any person not authorized to read this part of the data, when these data are communicated between the protective server (6) and the client terminal (1),
- means of comparison to compare, with knowledge on at least one host site (2), a preferences profile categorizing the user and approved by the latter, and
- means of controlling, according to information generated by the means of comparison, the exchange of data between the client terminal and this host site (2).

20. The protective server set as claimed in claim 19 comprising means (8) of creating at least one avatar by which to represent the user with respect to the network.

21. The protective server set as claimed in either one of claims 19 and 20, comprising means of managing an information profile based on personal data and on the communications it sets up with the network.

22. The protective server set as claimed in one of claims 19 to 21, comprising means of protecting at least a part of the data exchanged between the protective server (6) and the client terminal (1) from being read by a network access provider (3).

23. The protective server set as claimed in claim 22, comprising means of masking, from the access provider (3), addresses of host sites (2) to which data are sent from the client terminal (1).

24. The protective server set as claimed in either one of claims 22 and 23, wherein the protective server (6) supplies on request, instead of the access provider (3), an address of a host site (2) identified by a name, in correspondence with this name, by means of a domain name system.

25. The protective server set as claimed in one of claims 19 to 24, comprising means of eliminating a part, comprising information on the identity of the client terminal (1), of a connection request, formulated from the client terminal (1) intended for a host site (2), before that request travels to the host site (2) for which it is intended.

26. The protective server set as claimed in one of claims 20 to 25, comprising a knowledge base (13), associated with the user's actual identify or with an avatar of the user, wherein is recorded information on the behavior of the user when he communicates with the network by using respectively his actual identity or this avatar.

27. The protective server set as claimed in claim 26, comprising:
- a database (14, 15) intended to store at least one manifesto of the policy of protecting the personal data of a host site (2), and
- means of comparing each manifesto with the information recorded in the knowledge base (12, 13) in association with an avatar of the user or his actual identity.

28. The protective server set as claimed in one of claims 19 to 27, comprising means of filtering cookies originating from the network and means of storing, after approval by the user, at least a part of the filtered cookies.

29. The protective server set as claimed in one of claims 19 to 28, comprising a plurality of protective servers (6) organized into a network of proxy servers to allow increased proximity between the client terminal (1) and at least one of these protective servers (6).

30. The protective server set as claimed in claim 29, comprising a central server to direct the user to the protective server (6) closest to the client terminal (1).

31. The protective server set as claimed in one of claims 19 to 30, comprising a server (8) dedicated to the creation of avatars and to the storage of cookies, and comprising a knowledge base (13), associated with the actual identity of the user or with an avatar, wherein is recorded information on the user's behavior when he communicates with the network using respectively his actual identity or this avatar.

32. A computer program loadable into a memory, associated with a processor, and comprising portions of codes for the implementation of a method as claimed in one of claims 1 to 18, when the said program is executed.

33. A computer program loadable into a computer having a memory associated with a processor and comprising portions of codes adapted so that the computer forms a protective server set (6) as claimed in one of claims 19 to 31.

34. A data medium on which is recorded a computer program as claimed in one of claims 32 and 33.

35. A method of downloading a computer program as claimed in one of claims 32 and 33.

## Patentansprüche

1. Kommunikationsverfahren für einen gesteuerten Datenaustausch zwischen einem Client-Endgerät (1) und einem Host-Site-Netzwerk (2), wobei das Verfahren **dadurch gekennzeichnet ist, dass** :
- die Daten zwischen einem Client-Endgerät (1) und dem Netzwerk mittels eines Schutzservers (6) ausgetauscht werden,
- der Name oder die Identifikation des Client-Endgerätes im Bereich des Schutzservers (6) gegenüber dem Netz verborgen ist,
- mindestens ein Teil der Daten vor nicht autorisierten Personen geschützt ist und von diesen nicht gelesen werden kann, wenn diese Daten zwischen dem Schutzserver (6) und dem Client-Endgerät (1) übertragen werden,
- ein Voreinstellungsprofil, das einen Benutzer des Client-Endgerätes (1) bezeichnet und von diesem Benutzer genehmigt wurde, mit dem auf mindestens einer Host-Site (2) vorhandenen Wissen verglichen wird, und
- der Datenaustausch zwischen dem Client-Endgerät (1) und dieser Host-Site (2) in Abhängigkeit von den Informationen gesteuert wird, die diesem Vergleich entstammen.

2. Verfahren nach Anspruch 1, wobei der Benutzer vermittels eines Netzproviders (3) Zugang zu dem Schutzserver (6) erhält, und die zwischen dem Schutzserver (4) und dem Client-Endgerät (1) ausgetauschten Daten gegenüber dem Netzprovider mindestens teilweise lesegeschützt sind.

3. Verfahren nach Anspruch 2, wobei die Host-Site Adressen (2), an die die Daten von dem Client-Endgerät (1) aus versendet werden, für den Provider (3) nicht sichtbar sind.

4. Verfahren nach einem der vorhergehenden Ansprüche 2 und 3, wobei der Schutzserver (6) auf Anfrage anstelle des Providers (3) mit Hilfe eines Systems für Domainnamen eine, durch einen Namen identifizierte, Host-Site Adresse liefert, und zwar in Übereinstimmung mit diesem Namen.

5. Verfahren nach einem der vorhergehenden Ansprüche, wobei ein Teil einer von dem Client-Endgerät (1) an eine Host-Site (2) formulierten Anfrage mit Informationen über die Identität des Client-Endgerätes (1) modifiziert wird, bevor er zu der Host-Site (2) gelangt, an die die Anfrage gerichtet ist.

6. Verfahren nach einem der vorhergehenden Ansprüche, mit einer Filterung von Cookies aus dem Netz durch den Schutzserver (6), und dem Abspeichern mindestens eines Teil dieser Cookies in den Schutzservern (6).

7. Verfahren nach einem der vorhergehenden Ansprüche, wobei ein E-Mail Server (9) mindestens eine E-Mail Adresse zum alleinigen Gebrauch liefert.

8. Verfahren nach Anspruch 7 mit einer Weiterverfolgung der Verwendung der Adresse zum alleinigen Gebrauch durch einen Dritten, dem diese E-Mail Adresse zugeordnet worden ist.

9. Verfahren nach einem der vorhergehenden Ansprüche, wobei einem Benutzer eine Vielzahl von E-Mail Konten zugewiesen wird, und zwar mit einem alleinigen Portal und unabhängig von dem Client-Endgerät und Personal zur Führung dieser Konten.

10. Verfahren nach einem der vorhergehenden Ansprüche, wobei im Zusammenhang mit Kenntnissen oder Wissen - das in einer Wissensdatenbank (14, 15) gespeichert ist - im Hinblick auf mindestens den Datenschutz durch Dritte, die eine Host-Site (2) betreiben, ein Vertrauensstatus mit dieser Host-Site (2) verbunden ist.

11. Verfahren nach Anspruch 10, wobei ein Formular zum Erfassen von Informationen über den Benutzer, das von einer Host-Site (2) geliefert wird, und der Registrierung der erfassten Informationen durch diese Host-Site (2) dient, von dem Schutzserver (6) entsprechend dem Vertrauensstatus automatisch ausgefüllt wird, bevor es dem Benutzer zur Genehmigung präsentiert wird.

12. Verfahren nach Anspruch 11, wobei die Genehmigung durch den Benutzer automatisch nach einem Schutzprofil erfolgt, das er vorher festgelegt hat.

13. Verfahren nach einem der vorhergehenden Ansprüche, wobei der Benutzer des Client-Endgerätes (1) im Netz durch mindestens einen Avatar repräsentiert wird.

14. Verfahren nach Anspruch 13, wobei ein Informationsprofil mit dem Voreinstellungsprofil mit der tatsächlichen Identität des Benutzers oder jedem Avatar verbunden ist und in einer Wissensdatenbank (12, 13) gespeichert wird, wobei dieses Profil zumindest teilweise durch das Verhalten des Benutzers bestimmt wird, wenn er mit dem Netz kommuniziert, indem er diesen Avatar verwendet.

15. Verfahren nach Anspruch 14, wobei das Informationsprofil von dem Benutzer mit Hilfe eines Konfigurationsservers (7) modifiziert wird.

16. Verfahren nach einem der Ansprüche 13 bis 15, wobei eine Genehmigung zur Nutzung von Informationen, die mit der tatsächlichen Identität des Benutzers oder des Avatars verbunden sind, unter dem der Benutzer auf diese Host-Site (2) zugreift, durch einen Dritten, der die Host-Site (2) nutzt, von dem Benutzer mit Hilfe der Auswahl und Aktivierung eines vorher festgelegten Schutzprofils geregelt wird.

17. Verfahren nach den Ansprüchen 10 und 16, wobei das Schutzprofil dem Vertrauensstatus gegenübergestellt wird, um eine automatische Verarbeitung der Daten festzulegen, die zwischen dieser Host-Site (2) und dem Client-Endgerät (1) ausgetauscht werden, wenn der Benutzer eine Verbindung zu einer Host-Site (2) herstellen möchte, sowie vor dieser Verbindung, und wenn eine Host-Site (2) mit dem Client-Endgerät (1) eine Verbindung herstellen möchte.

18. Verfahren nach den Ansprüchen 6 und 17, wobei die automatische Verarbeitung der zwischen der Host-Site (2) und dem Client-Endgerät (1) ausgetauschten Daten die Filterung von Cookies aus dem Netz und das Abspeichern mindestens eines Teils der gefilterten Cookies in dem Schutzserver (6) umfasst.

19. Schutzservereinheit zur Herstellung eines Interface zwischen einem Client-Endgerät (1) und einem Netz von Host-Sites (2) und um es einem Benutzer des Client-Endgerätes (1) zu ermöglichen, die Verbreitung von Informationen, die ihn betreffen, in dem Netz zu kontrollieren, wobei diese Schutzservereinheit (6) folgendes umfasst :
- Einrichtungen im Bereich des Schutzservers (6), um die Identifikation des Client-Endgerätes (1) gegenüber dem Netz zu verbergen,
- Einrichtungen, um mindestens einen Teil der Daten zu schützen, so dass nicht autorisierte Personen diesen Teil der Daten nicht lesen können, wenn diese Daten zwischen dem Schutzserver (6) und dem Client-Endgerät (1) übermittelt werden,
- Vergleichseinrichtungen, um ein Voreinstellungsprofil, das den Benutzer charakterisiert und das von ihm genehmigt wurde, mit Wissen oder Daten auf mindestens einer Host-Site (2) zu vergleichen, und
- Einrichtungen, um den Austausch von Daten zwischen dem Client-Endgerät und dieser Host-Site (2) entsprechend den Informationen, die von den Vergleichseinrichtungen erzeugt worden sind, zu kontrollieren.

20. Schutzservereinheit nach Anspruch 19 mit Einrichtungen (8) zur Erzeugung mindestens eines Avatars, mittels dessen der Benutzer im Netz repräsentiert werden kann.

21. Schutzservereinheit nach einem der Ansprüche 19 und 20 mit Einrichtungen, um auf der Basis persönlicher Daten und den Verbindungen, die mit dem Netz hergestellt werden, ein Informationsprofil zu verwalten.

22. Schutzservereinheit nach einem der Ansprüche 19 bis 21 mit Einrichtungen, um mindestens einen Teil der Daten, die zwischen dem Schutzserver (6) und dem Client-Endgerät (1) ausgetauscht werden, davor zu schützen, dass sie von einem Netzprovider (3) gelesen werden können.

23. Schutzservereinheit nach Anspruch 22 mit Einrichtungen, um Host-Site-Adressen (2), an die von dem Client-Endgerät (1) aus Daten verschickt werden, dem Provider (3) gegenüber zu verbergen.

24. Schutzservereinheit nach einem der Ansprüche 22 und 23, wobei der Schutzserver (6) mit Hilfe eines Domainnamensystems auf Anfrage anstelle des Providers (3) eine durch einen Namen identifizierte Host-Site Adresse (2) in Übereinstimmung mit diesem Namen liefert.

25. Schutzservereinheit nach einem der Ansprüche 19 bis 24 mit Einrichtungen, um einen Teil einer Verbindungsanfrage, der Informationen über die Identität des Client-Endgerätes (1) besitzt, und die von dem Client-Endgerät (1) aus an eine Host-Site (2) formuliert wurde, zu eliminieren, bevor diese Anfrage zu der Host-Site (2) abgeht, für die sie bestimmt ist.

26. Schutzservereinheit nach einem der Ansprüche 20 bis 25 mit einer Wissensdatenbank (13), die mit der tatsächlichen Identität des Benutzers oder mit einem Avatar des Benutzers verknüpft ist, in der Informationen über das Verhalten des Benutzers eingetragen sind, wenn er mit dem Netz verbunden ist, wobei er jeweils seine tatsächliche Identität oder diesen Avatar verwendet.

27. Schutzservereinheit nach Anspruch 26 mit :
- einer Datenbank (14, 15), in der mindestens eine Datenschutzerklärung einer Host-Site (2) gespeichert werden soll, und
- Einrichtungen zum Vergleich jeder Erklärung mit den in der Wissensdatenbank (12, 13) in Verbindung mit einem Avatar des Benutzers oder seiner tatsächlichen Identität eingetragenen Informationen.

28. Schutzservereinheit nach einem der Ansprüche 19 bis 27 mit Einrichtungen zum Filtern von Cookies aus dem Netz und Einrichtungen zum Speichern mindestens eines Teils der gefilterten Cookies nach Zustimmung durch den Benutzer.

29. Schutzservereinheit nach einem der Ansprüche 19 bis 28 mit einer Vielzahl von Schutzservern (6), die in einem Netzwerk aus Proxy-Servern organisiert sind, um eine größere Nähe zwischen dem Client-Endgerät (1) und mindestens einem dieser Schutzserver (6) ermöglichen.

30. Schutzservereinheit nach Anspruch 29 mit einem zentralen Server, um den Benutzer zu dem Schutzserver (6) zu leiten, der dem Client-Endgerät (1) am nächsten liegt.

31. Schutzservereinheit nach einem der Ansprüche 19 bis 30 mit einem Server (8) für die Erzeugung von Avatars und für das Abspeichern von Cookies, der eine Wissensdatenbank (13) besitzt, die mit der tatsächlichen Identität des Benutzers oder mit einem Avatar verbunden ist, und in der Informationen über das Verhalten des Benutzers verzeichnet sind, wenn dieser mit dem Netz verbunden ist, wobei er jeweils seine tatsächliche Identität oder diesen Avatar benutzt.

32. Computerprogramm, das in einen Arbeitsspeicher geladen werden kann, mit einem Prozessor verbunden ist und Teile von Codes für die Durchführung eines Verfahrens nach einem der Ansprüche 1 bis 18 bei der Ausführung des Programmes besitzt.

33. Computerprogramm, das in einen Computer geladen werden kann, der einen Arbeitsspeicher besitzt, der mit einem Prozessor verbunden ist, und Teile von Codes umfasst, die so eingestellt sind, dass der Computer eine Schutzservereinheit (6) nach einem der Ansprüche 19 bis 31 bildet.

34. Datenträger, auf dem ein Computerprogramm nach einem der Ansprüche 32 und 33 gespeichert ist.

35. Kommunikationsverfahren nach einem der Ansprüche 1 bis 18 mit einer Vorstufe, in der ein Computerprogramm nach einem der Ansprüche 32 und 33 heruntergeladen wird.
